Europäisches Patentamt

European Patent Office

Office européen des brevets

(19)

(11) Veröffentlichungsnummer: **0 252 282**
**B1**

# EUROPÄISCHE PATENTSCHRIFT

(45) Veröffentlichungstag der Patentschrift:
**12.09.90**

(21) Anmeldenummer: **87107932.3**

(22) Anmeldetag: **02.06.87**

(51) Int. Cl.⁵: **F16K 1/30**, F16K 25/02,
F17C 13/04

(54) **Ventil für Gasbehälter.**

(30) Priorität: **04.07.86 DE 3622527**

(43) Veröffentlichungstag der Anmeldung:
**13.01.88 Patentblatt 88/2**

(45) Bekanntmachung des Hinweises auf die Patenterteilung:
**12.09.90 Patentblatt 90/37**

(84) Benannte Vertragsstaaten:
**AT CH DE ES FR GB LI NL**

(56) Entgegenhaltungen:
**DE-U- 8 425 137**
**FR-A- 679 464**
**FR-A- 2 185 144**

**PATENT ABSTRACTS OF JAPAN, Band 4,**
**Nr. 57 (M-9)[539], 26. April 1980; &**
**JP-A-55 24 230 (GASUTETSUKU K.K.) 21-02-1980**

(73) Patentinhaber: **Drägerwerk Aktiengesellschaft,**
**Moislinger Allee 53-55, D-2400 Lübeck 1(DE)**

(72) Erfinder: **Wienke, Volker Dipl.-Ing., Georgstrasse 34,**
**D-2400 Lübeck(DE)**
Erfinder: **Scheel, Heinrich, Maiblumenstrasse 1,**
**D-2400 Lübeck(DE)**

**Beschreibung**

Die Erfindung betrifft ein Ventil für Gasbehälter nach dem Oberbegriff des Patentanspruchs 1.

Für Fälle, in denen höchstreine Gase zu verschiedenen Produktionszwecken, wie z.B. die Halbleiterfertigung, benötigt werden, sind übliche Ventile für Gasbehälter wenig geeignet. Die Verwendung reinster Gase läßt keine Verunreinigung durch auch die geringsten Mengen zu, die in der Ventilkammer oder der Gasabführungsleitung dieser Ventile vorhanden sein könnten. Darüberhinaus sind spezielle Reinstgase mit Luft unverträglich, korrosiv oder toxisch. So würde beispielsweise Silan bei Berührung mit Luftresten in der Ventilkammer verpuffen. Toxische Gase würden das Arbeitspersonal gefährden. Es ist zwar möglich, sämtliche abgangsseitigen Versorgungsleitungen über einen getrennten Spülkreislauf mit einem dafür geeigneten Gas zu spülen, um beim Start, nach Unterbrechungen oder Öffnungen des gasführenden Systems die Anlagen zunächst zu inertisieren, jedoch bleibt bei diesen Spülvorgängen das Verschlußventil unzureichend gespült, weil es nicht im direkten Spülstrom angeordnet, sondern nur durch die Gasabführungsleitung zugänglich ist; denn auf der Zuströmseite befindet sich ja der Gasvorrat. Zur Spülung der sackartigen Räume des Verschlußventils selbst sind gesonderte Handhabungen wie aufwendige und im Erfolg unsichere Intervallspülung notwendig, zu denen die Gasabführungsleitung von den übrigen Verbraucherleitungen getrennt werden muß. Die danach verbleibenden Verunreinigungen entsprechen dann immer noch nicht den hohen Anforderungen an die Reinstgas-Atmosphäre.

Aus der DE-PS 667 378 ist ein Ventil bekanntgeworden, das zum Abschluß von Hochdruckgasbehältern dient und gleichzeitig als Entlüftungsventil für die Gasabführungsleitung ausgebildet ist. Ein Schließbolzen öffnet und schließt wechselweise sowohl ein Hochdruckventil als auch ein Entlüftungsventil. Bei geöffnetem Hochdruckventil strömt Gas aus dem Behälter in die Gasabführungsleitung zu einem Verbraucher. Soll der Behälter verschlossen werden, wird der Schließbolzen gegen das Hochdruckventil gedrückt und gibt dabei gleichzeitig das Entlüftungsventil frei. Der in der Ventilkammer und der Gasabführungsleitung befindliche Überdruck kann dann über das geöffnete Entlüftungsventil in die Umgebung entweichen.

Dieses bekannte Ventil ist für die Verwendung mit Reinstgasen nicht geeignet, weil bei jeder Betriebsunterbrechung und Schließen des Hochdruckventils die Ventilkammer und die Gasabführungsleitung über das Entlüftungsventil mit der Umgebung in Verbindung gebracht werden und von dorther dann erneut verunreinigt würden. Ein weiterer Überstand ist, daß während einer Übergangsphase beim Öffnen oder Schließen, in der Hochdruck- und Entlüftungsventil gleichzeitig offenstehen, Gasvorrat und Umgebung verbunden sind.

In der FR-A 2 185 144 ist ein Reduzierventil beschrieben, in dessen Ventilkammer eine Spülleitung mündet, aus welcher bei geöffnetem Ventil Verunreinigungen hauptsächlich aus der Ventilkammer herausgetrieben werden können. Für eine wirksame Durchspülung der Ventilkammer bis in die Gasabführleitung zum Verbraucher hin, wozu an die Spülleitung von außen heran eine gesonderte Spülgasquelle angeschlossen werden muß, ist dieses bekannte Ventil denkbar schlecht geeignet; der Totraum in der Spülleitung, in dem nach erfolgter Spülung noch erheblich Restmengen des Spülgases verbleiben, ist zu groß, um die Reinheitsanforderungen für die Kontrolle höchstreinen Gases zu erfüllen. Darüberhinaus führt die höhenversetzte Anordnung der Mündungen von Spülleitung und Gasabführleitung in die Ventilkammer dazu, daß sich Ecken und Kammern bilden, in denen nach Durchströmung mit Spülgas Spülgasreste in toten Strömungsbereichen verbleiben und zu unerwünschten Vermischungen mit dem Reinstgas führen können.

Aus der FR-A 679 464 ist ein Ventil bekannt, welches einen Spülgasanschluß bis hin zum Verschlußventilsitz aufweist. Das Spülgas wird zwar von außerhalb des Ventils herangeführt, ein Spülvorgang ist jedoch nur bei geöffnetem Verschlußventil möglich. Außerdem entstehen durch die Riefelung des konischen Ventils Hohlräume, in denen sich Restmengen fangen können.

Der vorliegenden Erfindung liegt die Aufgabe zugrunde, ein Ventil der genannten Art so zu verbessern, daß seine Ventilkammer bei geringstmöglichem Totraumvolumen der Spülleitung strömungsabwärts zum Spülventil vollständig und ohne Hinterlassung von Spülgasnestern durchspült werden kann.

Die Lösung der Aufgabe erfolgt durch die im kennzeichnenden Teil des Patentanspruchs 1 angeführten Merkmale.

Über die Spülleitung kann bei geschlossenem Verschlußventil das Inertgas von außerhalb des Absperrventils in die Gasabführungsleitung gebracht werden, so daß eine Durchspülung des gesamten gasführenden Systems bis hin zum jeweiligen Verbraucheranschluß durchgeführt wird, wobei die Verunreinigungen vollständig ausgetrieben werden können, die in der Ventilkammer und dort besonders um den Ventilsitz herum eingefangen sind.

Da die Mündung der Spülleitung in die Ventilkammer mit dem Austritt der Gasabführungsleitung aus der Ventilkammer in einer diametralen Ebene liegt, ist ein Höhenversatz zwischen der Mündung und dem Austritt ausgeschlossen. Die diametrale Ebene ist dabei die Ebene, in der sich der Ventilsitz des Verschlußventils befindet. Dadurch ist eine Umspülung gerade des Verschlußventils sichergestellt, welches sonst im Strömungsschatten des Spülgases läge und in dem dann Spülgasreste gefangen gehalten werden könnten. In dieser Ebene liegend befinden sich die Mündung und der Auslaß zum Zwecke einer möglichst vollständigen Spülung in Durchströmungsrichtung einander gegenüber.

Der verbleibende Totraum hinter dem Spülventil wird durch die Ausbildung der Mündung zur Durchlaßöffnung des Spülventilsitzes so gering wie möglich gehalten. Er ist lediglich durch die Wandstärke zwischen Ventilkammer und Spülventilsitz bestimmt.

Die Anordnung der Ventile erlaubt eine Spülung sowohl mit Brauchgas, läßt aber auch eine gefahrlose Spülung mit Inertgasen zu, um z.B. bei Verwendung von sehr giftigen und aggressiven Gasen vor und nach dem Wechsel des Gasbehälters eine ungefährliche Atmosphäre zu schaffen. Im letzten Fall wird bereits nach kurzem Strömen oder Intervallabfluß des Brauchgases dessen erforderliche Reinheit erreicht.

Eine besonders günstige Ausgestaltung zur Erzielung eines geringen Totraumvolumens ist dadurch verwirklicht, daß das Verschlußventil und das Spülventil als Kugelventile ausgeführt sind. Der Boden des Spülventils, der den Spülventilsitz enthält, ist gleichzeitig ein Teil der Wand der Ventilkammer, so daß die Wandstärke zwischen dieser und der Spülventilkammer sehr gering gehalten werden kann.

Ein Ausführungsbeispiel der Erfindung wird anhand einer schematischen Zeichnung dargestellt und im folgenden näher erläutert.

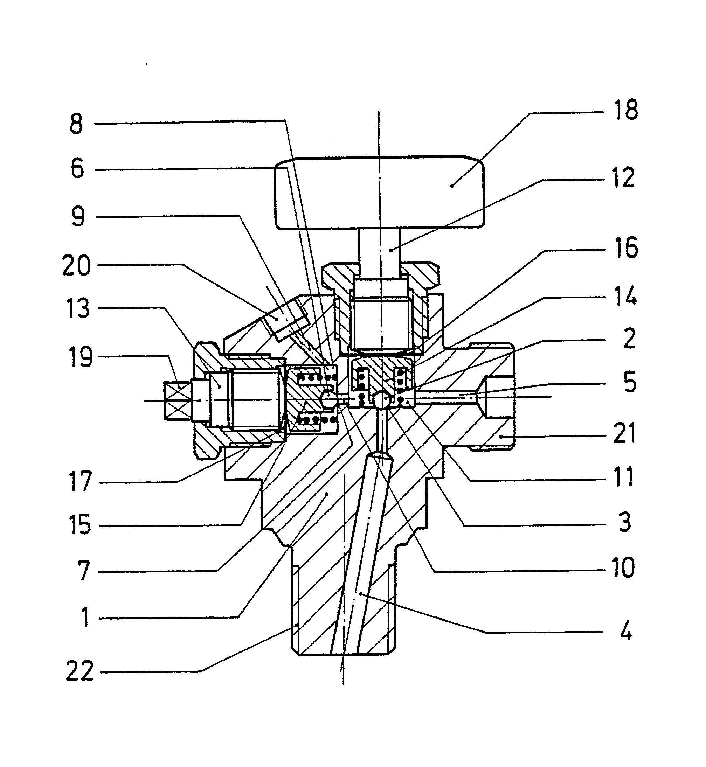

Die einzige Figur zeigt die Schnittdarstellung eines Ventils. In einem Ventilkörper (1) ist ein Verschlußventil (2, 3) zwischen einer Gasdruckleitung (4) und einer Gasabführungsleitung (5) angeordnet.

Weiterhin befindet sich in dem Ventilkörper (1) ein Spülventil (6, 7), in dessen Spülventilkammer (8) eine Spülleitung (9) eingeführt ist. Der Spülventilsitz (7) ist gleichzeitig die Öffnung für einen Durchlaßkanal (10), der als Mündung der Spülleitung (9) in der Ventilkammer (11) des Verschlußventils (2, 3) endet. Beide Ventile sind als Kugelventile ausgebildet, deren Ventilkugeln (2, 6) in geschlossenem Zustand der Ventile auf ihre entsprechenden Ventilsitze (3, 7) gedrückt sind. Sowohl das Verschlußventil (2, 3) als auch das Spülventil (6, 7) sind durch Verschlußspindel (12) und Spülspindel (13) über entsprechende Bolzen (14, 15) betätigbar. Für eine entsprechende Gasabdichtung sorgen Membranen (16, 17). Die Verschlußspindel (12) ist über ein Handrad (18) und die Spülspindel (13) über einen Vierkantanschluß (19) beispielsweise mit Hilfe eines nicht dargestellten Schlüssels bedienbar. Die Spülleitung (9) kann über einen Spülanschluß (20) an eine nicht dargestellte Spülgasversorgung angeschlossen werden. Die Gasabführungsleitung (5) ist mit einem Ventilseitenanschluß (21) versehen, an welchen der Verbraucher angeschlossen werden kann. Die Verbindung des Ventilkörpers (1) mit dem nicht dargestellten Gasbehälter stellt ein Einschraubstutzen (22) her.

Zum Spülen des Ventils wird bei geschlossenem Verschlußventil (2, 3) das Spülventil (6, 7) geöffnet, so daß das Spülgas aus der Spülleitung (9) in die Spülventilkammer (8) und von dort über den Durchlaßkanal (10) in die Ventilkammer (11) und aus der Gasabführungsleitung (5) zu dem Versorgungsanschluß (21) austreten kann. Die notwendige Dauer der Spülung kann dadurch ermittelt werden, daß die Reinheit des Gases durch Kontrolle in der Gasabführungsleitung ermittelt wird, so daß bei Erreichen der gewünschten Gasqualität das Spülventil (6, 7) wieder geschlossen werden kann. Durch Öffnen des Verschlußventils (2, 3) kann jetzt das Brauchgas über die Gasdruckleitung (4) in die Gasabführungsleitung (5) geführt werden.

## Patentansprüche

1. Absperrventil für Gasbehälter mit einer aus dem Behälter zu einer Ventilkammer (11) führenden Gasdruckleitung (4), die durch ein Verschlußventil (2, 3) von einer Gasabführungsleitung (5) abschließbar ist, wobei eine in die Ventilkammer (11) mündende, mit einem Spülventil (6, 7) ausgestattete Spülleitung (9, 10) vorgesehen ist, welche mit einem Spülanschluß (20) außerhalb des Ventilkörpers (1) versehen ist, wobei die Mündung der Spülleitung (9) in die Ventilkammer (11) als Durchlaßöffnung (10) des Spülventilsitzes (7) ausgebildet ist, dadurch gekennzeichnet, daß an dem Spülanschluß (20) eine Spülgasversorgung zur Spülung bei geöffnetem Spülventil (6, 7) und geschlossenem Verschlußventil (2, 3) durch die Durchlaßöffnung (10) in die Ventilkammer (11) und die Gasabführungsleitung (5) anschließbar ist, und daß der Austritt der Gasabführungsleitung (5) aus der Ventilkammer (11) auf einer diametralen Ebene in Höhe des Ventilsitzes (3) des Verschlußventils (2, 3) der Mündung (10) gegenüberliegend angeordnet ist.

2. Absperrventil nach Anspruch 1, dadurch gekennzeichnet, daß das Spülventil (6, 7) in einer Spülventilkammer (8) aufgenommen ist und die Spülleitung (9) die Spülventilkammer (8) durchsetzt, und daß die Wand der Ventilkammer (11) zumindest teilweise als den Spülventilsitz (7) enthaltenden Boden der Spülventilkammer (8) ausgebildet ist.

3. Absperrventil nach Anspruch 1 oder 2, dadurch gekennzeichnet, daß das Verschlußventil (2, 3) und das Spülventil (6, 7) als Kugelventile ausgeführt sind.

## Claims

1. A shut-off valve for gas tanks with a gas pressure line (4) leading from the tank to a valve chamber (11), which is able to be sealed by a closure valve (2, 3) of a gas outlet line (5), wherein a rinsing line (9, 10) is provided, opening into the valve chamber (11) and equipped with a rinsing valve (6, 7), which line is provided with a rinsing connection (20) outside the valve body (1), wherein the mouth of the rinsing line (9) into the valve chamber (11) is formed as a conduit opening (10) of the rinsing valve seat (7), characterised in that a rinsing gas supply for rinsing, when the rinsing valve (6, 7) is open and when the sealing valve (2, 3) is closed, is able to be connected to the rinsing connection (20) through the conduit opening (10) into the valve chamber (11) and the gas outlet line (5), and in that the exit of the gas outlet line (5) from the valve chamber (11) is arranged on a diametral plane at the height of the valve seat (3) of the closure valve (2, 3) opposing the mouth (10).

2. A shut-off valve according to claim 1, characterised in that the rinsing valve (6, 7) is taken into a rinsing valve chamber (8) and the rinsing line (9) permeates the rinsing valve chamber (8) and in that the wall of the valve chamber (11) is constructed at least partially as the base of the rinsing valve chamber (8) containing the rinsing valve seat (7).

3. A shut-off valve according to claim 1 or 2, characterised in that the closure valve (2, 3) and the rinsing valve (6, 7) are designed as ball valves.

**Revendications**

1. Vanne d'arrêt de réservoirs de gaz comportant une conduite de gaz sous pression (4), menant du réservoir à une chambre à vanne (11) et qui peut être séparée d'une conduite d'évacuation de gaz (5) par une vanne de fermeture (2, 3), une conduite de lavage (9, 10), équipée d'une vanne de lavage (6, 7) débouchant dans la chambre à vanne (11), étant prévue, laquelle conduite de lavage est pourvue d'un branchement de lavage (20) à l'extérieur du corps de vanne (1), l'embouchure de la conduite de lavage (9) dans la chambre à vanne (11) se présentant sous la forme d'un orifice de passage (10) pratiqué dans le siège de vanne de lavage (7), caractérisée en ce qu'on peut raccorder au branchement de lavage (20) une alimentation en gaz de lavage, pour le lavage, lorsque la vanne de lavage (6, 7) est ouverte et la vanne de fermeture (2, 3) fermée, par l'orifice de passage (10) débouchant dans la chambre à vanne (11) et par la conduite d'évacuation de gaz (5), et en ce que la sortie de la conduite d'évacuation de gaz (5), sortant de la chambre à vanne (11), est disposée, sur un plan diamétral, à hauteur du siège de vanne (3) de la vanne de fermeture (2, 3), à l'opposé de l'embouchure (10).

2. Vanne d'arrêt selon la revendication 1, caractérisée en ce que la vanne de lavage (6, 7) est logée dans une chambre à vanne de lavage (8), en ce que la conduite de lavage (9) traverse la chambre à vanne de lavage (8) et en ce que la paroi de la chambre à vanne (11) constitue au moins en partie, le fond, contenant le siège de vanne de lavage (7), de la chambre à vanne de lavage (8).

3. Vanne d'arrêt selon la revendication 1 ou 2, caractérisée en ce que la vanne de fermeture (2, 3) et la vanne de lavage (6, 7) sont des vannes sphériques.